# EUROPEAN PATENT APPLICATION

(11) **EP 4 651 164 A1**
(43) Date of publication of application: **19.11.2025**
(21) Application number: 24778811.0
(22) Date of filing: 16.02.2024
(51) Int. Cl.: H01G 4/30

(54) **MULTILAYER CERAMIC CAPACITOR**

(30) Priority: 29.03.2023 JP 2023054073
(71) Applicant: Murata Manufacturing Co., Ltd., Nagaokakyo-shi, Kyoto 617-8555 (JP)
(72) Inventor: KATSUBE Shima, Nagaokakyo-shi, Kyoto 617-8555 (JP); MISHIMA Yasuhiro, Nagaokakyo-shi, Kyoto 617-8555 (JP); ZENZAI Kota, Nagaokakyo-shi, Kyoto 617-8555 (JP)
(74) Representative: Zimmermann, Tankred Klaus
(86) International application number: PCT/JP2024/005489
(87) International publication number: WO 2024/202666

(57) **Abstract**

The present invention provides a multilayer ceramic capacitor that has high mechanical strength and reduced ESR. A multilayer ceramic capacitor 1 comprises: a laminate 2; a first internal electrode layer 6a that is disposed on a plurality of dielectric layers 5 and that is exposed at a first end surface E1; a second internal electrode layer 6b that is disposed on the plurality of dielectric layers 5 and that is exposed at a second end surface E2; a first external electrode 20a that is disposed on the first end surface E1; and a second external electrode 20b that is disposed on the second end surface E2. The first external electrode 20a and the second external electrode 20b have: a conductive resin layer 22 that has an underlayer electrode layer 21 which includes a metal component and a thermosetting resin 38 and a metal filler 30 which are disposed on the underlayer electrode layer 21; a Ni plating layer 23 that is disposed on the conductive resin layer 22; and a Sn plating layer 24 that is disposed on the Ni plating layer 23. Disposed on at least a part of a surface of the metal filler 30 is Ni, which is a component of the Ni plating layer 23.

## Description

### TECHNICAL FIELD

The present invention relates to a multilayer ceramic capacitor.

### BACKGROUND ART

In recent years, ceramic electronic components such as multilayer ceramic capacitors are designed to be used in more severe environments compared to the past.

For example, electronic components used in mobile devices such as mobile phones and portable music players are required to withstand the impact when dropped. Specifically, it is necessary to ensure that electronic components do not fall off from the mounting substrate or cracks do not occur therein when these electronic components are subjected to dropping impact.

In addition, electronic components used in vehicle-mounted devices such as ECUs (Electronic Control Units) are required to withstand the shock from thermal cycling. Specifically, it is necessary to ensure that cracks do not occur in electronic components when these electronic components are subjected to the bending stress generated by thermal expansion and contraction of the mounting substrate during thermal cycling.

In response to this, it has been proposed to use a thermosetting electrically conductive resin paste for manufacturing the external electrodes of ceramic electronic components. For example, in Patent Document 1, an epoxy-based thermosetting resin layer is formed between a conventional electrode layer and a Ni plated layer, as a measure to prevent cracks from occurring in the capacitor body, even under severe environments. That is, measures are being taken in order to improve deflection resistance.

In such a configuration, when the stress due to impact from dropping or bending stress generated by thermal expansion and contraction of the mounting substrate during thermal cycling occurs, the stress transmitted to the mounting substrate, in other words, the distortion of the mounting substrate, is released by allowing peeling between the electrode layer and the epoxy-based thermosetting resin layer with the tip of the epoxy-based thermosetting resin layer as a starting point, thereby reducing or preventing the occurrence of cracks in the ceramic electronic component body.

### Citation List

### Patent Document

Patent Document 1: Japanese Unexamined Patent Application, Publication No. H11-162771

### DISCLOSURE OF THE INVENTION

### Problems to be Solved by the Invention

However, in a multilayer ceramic electronic component such as that of Patent Document 1, in a design in which an epoxy-based thermosetting resin layer is formed between the electrode layer and the Ni plated layer, the contact resistance between the epoxy-based thermosetting resin layer and the Ni plated layer is high, resulting in a high ESR (equivalent series resistance). Therefore, it is an object for the present invention to provide multilayer ceramic electronic components, particularly multilayer ceramic capacitors with high mechanical strength and reduced ESR.

### Means for Solving the Problems

A multilayer ceramic capacitor according to an embodiment of the present invention includes: a multilayer body including a plurality of dielectric layers that are laminated, a first main surface and a second main surface that are opposed to each other in a height direction, a first lateral surface and a second lateral surface that are opposed to each other in a width direction orthogonal to the height direction, and a first end surface and a second end surface that are opposed to each other in a length direction orthogonal to the height direction and the width direction; a first internal electrode layer that is on each of the plurality of dielectric layers and exposed at the first end surface; a second internal electrode layer that is on each of the plurality of dielectric layers and exposed at the second end surface; a first external electrode on the first end surface; and a second external electrode on the second end surface, in which each of the first external electrode and the second external electrode includes a base electrode layer including a metal component, an electrically conductive resin layer that is on the base electrode layer and includes a thermosetting resin and a metal filler, a Ni plated layer on the electrically conductive resin layer, and a Sn plated layer on the Ni plated layer; and Ni, which is a component of the Ni plated layer, is provided on at least a portion of a surface of the metal filler.

### Effects of the Invention

According to the present invention, it is possible to provide multilayer ceramic electronic components, particularly multilayer ceramic capacitors with high mechanical strength and reduced ESR.

### BRIEF DESCRIPTION OF THE DRAWINGS

FIG. 1 is a perspective view of a multilayer ceramic capacitor according to an embodiment of the present invention.
FIG. 2 is a cross-sectional view taken along the line I-I in FIG. 1.
FIG. 3 is a cross-sectional view taken along the line II-II in FIG. 1.
FIG. 4 is an enlarged view of a region R1 enclosed by a frame in FIG. 1.
FIG. 5A is an enlarged view of a region R2 enclosed by a frame in FIG. 4.
FIG. 5B is a view showing an example of a Ni-coated filler.
FIG. 5C is a view showing an example of a Ni-coated filler.
FIG. 5D is a view showing an example of a Ni-coated filler.
FIG. 5E is a view showing an example of a Ni-coated filler.
FIG. 5F is a view showing an example of a Ni-coated filler.
FIG. 6 is a view showing characteristics of Examples and Comparative Examples.

### PREFERRED MODE FOR CARRYING OUT THE INVENTION

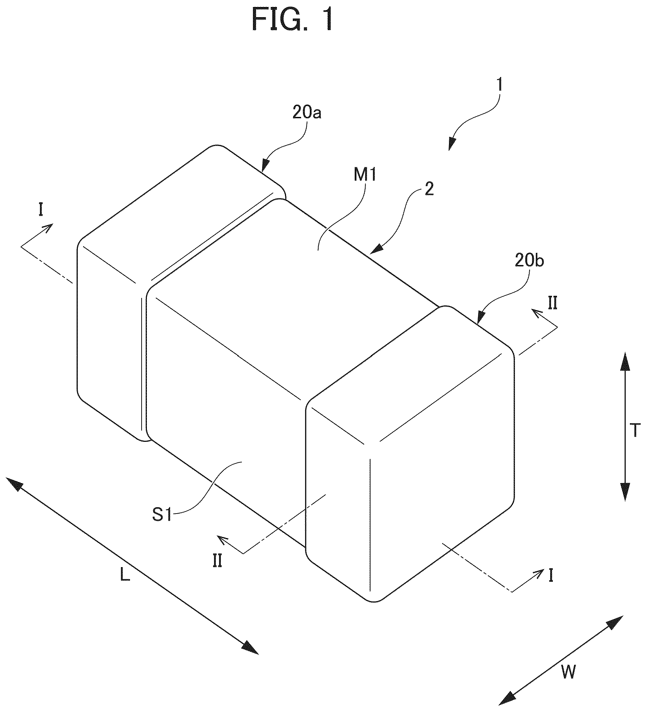

An embodiment of the present invention will be described based on FIG. 1. FIG. 1 is a perspective view of a multilayer ceramic capacitor 1 according to an embodiment of the present invention.

### (Multilayer Body)

The multilayer body 2 includes a plurality of laminated dielectric layers and a plurality of internal electrode layers. The multilayer body 2 has an approximately rectangular parallelepiped shape. In the multilayer body 2, the direction in which the dielectric layers and the internal electrode layers are laminated is defined as the height direction T. The direction perpendicular to the height direction T is defined as the width direction W. The direction perpendicular to the height direction T and the width direction W is defined as the length direction L.

In the multilayer body 2, one of the two surfaces opposed to each other in the height direction T is defined as the first main surface M1. The other one is defined as the second main surface M2. In the multilayer body 2, one of the two surfaces opposed to each other in the width direction W is defined as the first lateral surface S1. The other one is defined as the second lateral surface. In the multilayer body 2, one of the two surfaces opposed to each other in the length direction L is defined as the first end surface E1. The other one is defined as the second end surface E2. The mounting surface of the multilayer ceramic capacitor 1 is the second main surface M2. The mounting surface refers to a surface that faces a wiring board or the like when the multilayer ceramic capacitor 1 is mounted on the wiring board or the like.

With respect to the cross section of the multilayer body 2, the cross section along the line I-I in FIG. 1 is defined as the LT cross section. With respect to the cross section of the multilayer body 2, the cross section along the line II-II in FIG. 1 is defined as the WT cross section.

A portion where three surfaces of the multilayer body 2 intersect is defined as a corner portion of the multilayer body 2, and a portion where two surfaces of the multilayer body 2 intersect is defined as a ridge portion of the multilayer body 2. It is preferable that the corner portions and the ridge portions are rounded.

### (Dielectric Layer)

The total number of dielectric layers laminated in the multilayer body 2 is preferably 15 or more and 2000 or less. The main material of the dielectric layer is a ceramic material. Examples of the ceramic material include dielectric ceramics mainly including BaTiO₃, CaTiO₃, SrTiO₃, CaZrO₃, etc. The ceramic material may be a dielectric ceramic in which secondary components such as Mn compounds, Fe compounds, Cr compounds, Co compounds, and Ni compounds are added to these main components.

The thickness of one dielectric layer is preferably 0.5 µm or more and 10 µm or less.

### (Division of Multilayer Body)

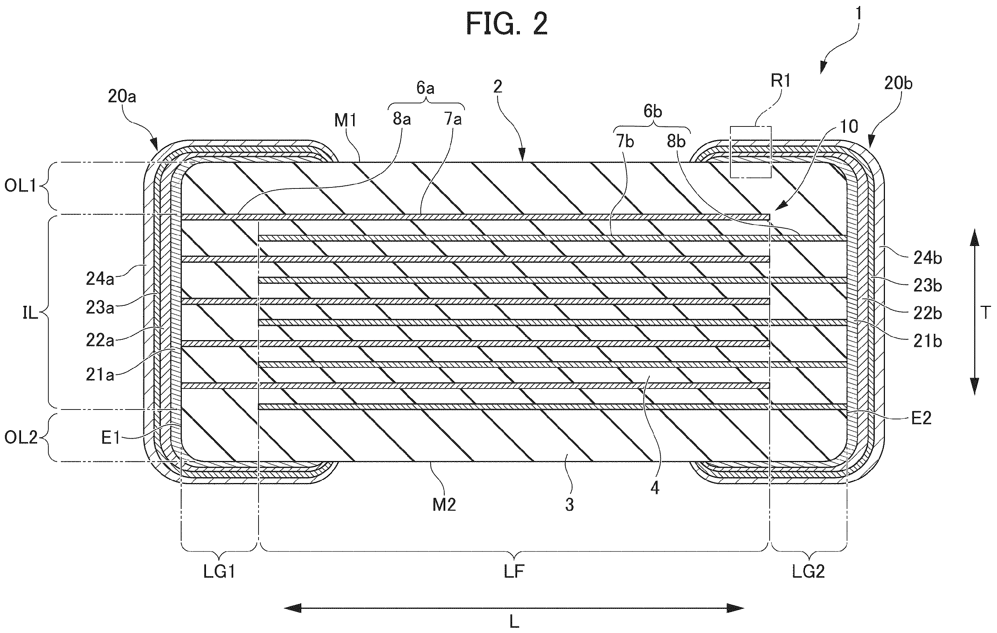

The division of the multilayer body 2 in the length direction L will be described based on FIG. 2. FIG. 2 is a cross-sectional view along the line I-I in FIG. 1. The multilayer body 2 can be divided in the height direction T into a first main surface-side outer layer portion OL1, an inner layer range IL, and a second main surface-side outer layer portion OL2. The first main surface-side outer layer portion OL1, the inner layer range IL, and the second main surface-side outer layer portion OL2 are arranged in this order from the first main surface M1 toward the second main surface M2 in the height direction T.

The first main surface-side outer layer portion OL1 is a portion between an internal electrode layer closest to the first main surface M1 and the first main surface M1. The inner layer range IL is a range or an area where internal electrode layers are opposed to each other. The second main surface-side outer layer portion OL2 is a portion between an internal electrode layer closest to the second main surface M2 and the second main surface M2.

The first main surface-side outer layer portion OL1 is located adjacent to the first main surface M1 of the multilayer body 2. The first main surface-side outer layer portion OL1 includes an aggregate of a plurality of dielectric layers located between the first main surface M1 and the internal electrode layer closest to the first main surface M1. The first main surface-side outer layer portion OL1 includes a plurality of dielectric layers located between the first main surface M1, and the outermost surface of the inner layer range IL adjacent to the first main surface M1 and an extension line from the outermost surface.

The second main surface-side outer layer portion OL2 is located adjacent to the second main surface M2 of the multilayer body 2. The second main surface-side outer layer portion OL2 includes an aggregate of a plurality of dielectric layers located between the second main surface M2 and the internal electrode layer closest to the second main surface M2. The second main surface-side outer layer portion OL2 includes a plurality of dielectric layers located between the second main surface M2, and the outermost surface of the inner layer range IL adjacent to the second main surface M2 and an extension line from the outermost surface.

The inner layer range IL is a range sandwiched between the first main surface-side outer layer portion OL1 and the second main surface-side outer layer portion OL2.

Among the dielectric layers, dielectric layers located in the first main surface-side outer layer portion OL1 and the second main surface-side outer layer portion OL2 are defined as outer dielectric layers 3. Among the dielectric layers, dielectric layers located in the inner layer range IL are defined as inner dielectric layers 4.

The following terms may be used in the description of dimensions and positions.

The length in the length direction L is defined as the length direction dimension. The length in the width direction W is defined as the width direction dimension. The length in the height direction T is defined as the height direction dimension.

The position at half the length direction dimension is defined as the middle position in the length direction L. The middle position in the length direction L is defined as the length direction-middle position.

The position at half the width direction dimension is defined as the middle position in the width direction W. The middle position in the width direction W is defined as the width direction-middle position.

The position at half the height direction dimension is defined as the middle position in the height direction T. The middle position in the height direction T is defined as the height direction-middle position.

The ends in the length direction L are defined as the length direction ends. The ends in the width direction W are defined as the width direction ends. The ends in the height direction T are defined as the height direction ends.

The size of the multilayer body 2 is not particularly limited. The length direction dimension of the multilayer body is preferably 0.2 mm or more and 10 mm or less. The width direction dimension of the multilayer body 2 is preferably 0.1 mm or more and 5 mm or less. The height direction dimension of the multilayer body 2 is preferably 0.1 mm or more and 5 mm or less.

### (L Gap)

The division of the multilayer body 2 in the length direction L will be explained. The multilayer body 2 can be divided in the length direction L into a first end surface-side outer layer portion LG1, a length direction counter portion LF, and a second end surface-side outer layer portion LG2. The first end surface-side outer layer portion LG1, the length direction counter portion LF, and the second end surface-side outer layer portion LG2 are arranged in this order from the first end surface E1 toward the second end surface E2 in the length direction L.

The length direction counter portion LF refers to a portion where the internal electrode layers are opposed to each other in the height direction T. The first end surface-side outer layer portion LG1 refers to a portion between the length direction counter portion LF and the first end surface E1. The second end surface-side outer layer portion LG2 refers to a portion between the length direction counter portion LF and the second end surface E2. The length direction counter portion LF corresponds to the counter electrode portion of the internal electrode layers. The first end surface-side outer layer portion LG1 and the second end surface-side outer layer portion LG2 correspond to extension electrode portions of the internal electrode layers. The first end surface-side outer layer portion LG1 and the second end surface-side outer layer portion LG2 are also referred to as L gaps.

The counter electrode portion includes first counter electrode portions 7a and second counter electrode portions 7b. The extension electrode portion includes first extension electrode portions 8a and second extension electrode portions 8b. The counter electrode portion and the extension electrode portions will be described later.

The first end surface-side outer layer portion LG1 is located on the first end surface E1 side. The first end surface-side outer layer portion LG1 is located between the first end surface E1 and the end of the second internal electrode layer 6b on the first end surface E1 side.

The second end surface-side outer layer portion LG2 is located adjacent to the second end surface E2. The second end surface-side outer layer portion LG2 is located between the second end surface E2 and the end of each of the first internal electrode layers 6a adjacent to the second end surface E2.

### (W Gap)

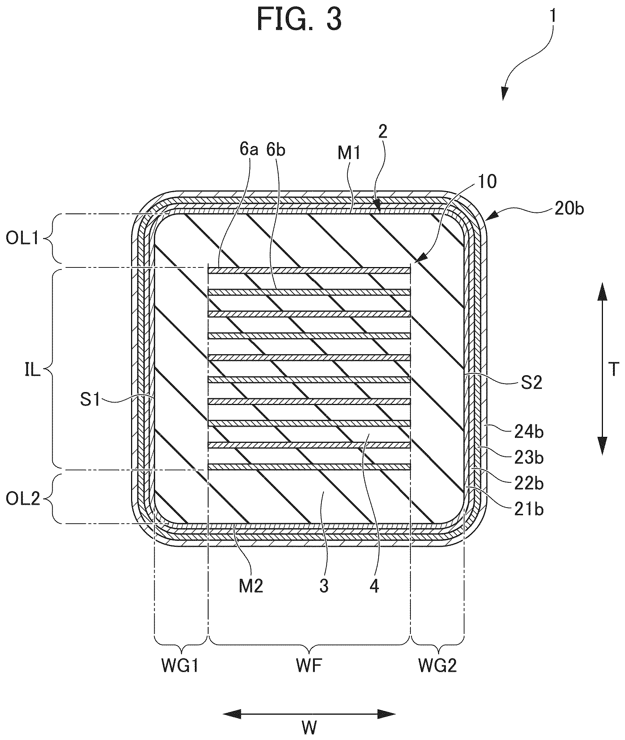

The division of the multilayer body 2 in the width direction W will be described with reference to FIG. 3. FIG. 3 is a cross-sectional view taken along the line II-II in FIG. 1. The multilayer body 2 can be divided into a first lateral surface-side outer layer portion WG1, a width direction counter portion WF, and a second lateral surface-side outer layer portion WG2 in the width direction W. The first lateral surface-side outer layer portion WG1, the width direction counter portion WF, and the second lateral surface-side outer layer portion WG2 are arranged in this order from the first lateral surface S1 toward the second lateral surface S2 in the width direction W.

The width direction counter portion WF refers to a portion where the internal electrode layers are opposed to each other in the height direction T. The first lateral surface-side outer layer portion WG1 refers to a portion between the width direction counter portion WF and the first lateral surface S1. The second lateral surface-side outer layer portion WG2 refers to a portion between the width direction counter portion WF and the second lateral surface S2. The first lateral surface-side outer layer portion WG1 and the second lateral surface-side outer layer portion WG2 are also referred to as W gaps.

The first lateral surface-side outer layer portion WG1 and the second lateral surface-side outer layer portion WG2 are portions where no internal electrode layers exist in the height direction T. The first lateral surface-side outer layer portion WG1 is located adjacent to the first lateral surface S1. The first lateral surface-side outer layer portion WG1 includes a plurality of dielectric layers located between the first lateral surface S1 and the outermost surface of the width direction counter portion WF adjacent to the first lateral surface S1.

The second lateral surface-side outer layer portion WG2 is located adjacent to the second lateral surface S2. The second lateral surface-side outer layer portion WG2 includes a plurality of dielectric layers located between the second lateral surface S2 and the outermost surface of the width direction counter portion WF adjacent to the second lateral surface S2.

### (Internal Electrode Layers)

The internal electrode layers include a plurality of first internal electrode layers 6a and a plurality of second internal electrode layers 6b. The first internal electrode layers 6a refer to internal electrode layers, each exposed at the first end surface E1. The second internal electrode layers 6b refer to internal electrode layers, each exposed at the second end surface E2.

Each of the first internal electrode layers 6a can be divided into the first counter electrode portion 7a and the first extension electrode portion 8a. The first counter electrode portion 7a refers to a portion opposed to a corresponding one of the second internal electrode layers 6b. The first extension electrode portion 8a refers to a portion extending from the first counter electrode portion 7a toward the first end surface E1 of the multilayer body 2.

The first extension electrode portion 8a includes an end adjacent to the first end surface E1, the end extending toward the surface of the first end surface E1 of the multilayer body 2. The end of the first extension electrode portion 8a extending toward the first end surface E1 provides an exposed portion at the first end surface E1.

Each of the second internal electrode layers 6b can be divided into the second counter electrode portion 7b and the second extension electrode portion 8b. The second counter electrode portion 7b refers to a portion that is opposed to a corresponding one of the first internal electrode layers 6a. The second extension electrode portion 8b is a portion that extends from the second counter electrode portion 7b toward the second end surface E2 of the multilayer body 2.

The second extension electrode portion 8b includes an end adjacent to the second end surface E2, the end extending toward the surface of the second end surface E2 of the multilayer body 2. The end of the second extension electrode portion 8b extending toward the second end surface E2 provides an exposed portion at the second end surface E2.

The shape of the first counter electrode portion 7a and the shape of the second counter electrode portion 7b are not particularly limited. The shape of the first counter electrode portion 7a and the shape of the second counter electrode portion 7b are preferably rectangular. The corner portions of the first counter electrode portion 7a and the corner portions of the second counter electrode portion 7b may be rounded. The corner portions of the first counter electrode portion 7a and the corner portions of the second counter electrode portion 7b may be provided obliquely. Being provided obliquely indicates being provided in a tapered shape.

The shape of the first extension electrode portion 8a and the shape of the second extension electrode portion 8b are not particularly limited. The shape of the first extension electrode portion 8a and the shape of the second extension electrode portion 8b are preferably rectangular. The corner portions of the first extension electrode portion 8a and the corner portions of the second extension electrode portion 8b may be rounded. The corner portions of the first extension electrode portion 8a and the corner portions of the second extension electrode portion 8b may be provided obliquely. Being provided obliquely indicates being provided in a tapered shape.

The width of the first counter electrode portion 7a and the width of the first extension electrode portion 8a may be the same. Either width among the width of the first counter electrode portion 7a or the width of the first extension electrode portion 8a may be narrower than the other.

The width of the second counter electrode portion 7b and the width of the second extension electrode portion 8b may be the same. Either width among the width of the second counter electrode portion 7b or the width of the second extension electrode portion 8b may be narrower than the other.

The materials of the first internal electrode layers 6a and the second internal electrode layers 6b may be, for example, metals such as Ni, Cu, Ag, Pd, and Au. The materials of the first internal electrode layers 6a and the second internal electrode layers 6b may be alloys containing at least one of the aforementioned metals, such as Ag-Pd alloy.

In the multilayer ceramic capacitor 1, capacitance is generated by the first counter electrode portion 7a and the second counter electrode portion 7b opposing each other with a corresponding one of the inner dielectric layers 4 interposed therebetween. This enables the multilayer ceramic capacitor 1 to develop capacitor characteristics.

The thickness of the first internal electrode layer 6a and the thickness of the second internal electrode layer 6b are preferably about 0.2 µm or more and 2.0 µm or less. The total number obtained by adding the number of the first internal electrode layer 6a and the number of the second internal electrode layer 6b is preferably 15 or more and 2000 or less.

### (Inner Layer Portion)

The portion where the first internal electrode layers 6a and the second internal electrode layers 6b are opposed to each other is defined as the inner layer portion 10. The inner layer portion 10 is the portion where the length direction counter portion LF shown in FIG. 2 and the width direction counter portion WF shown in FIG. 3 intersect with the inner layer range IL. The shape of the inner layer portion 10 is approximately a rectangular parallelepiped. In FIG. 2, the portion where the length direction counter portion LF and the inner layer range IL intersect is shown as the inner layer portion 10. Also, in FIG. 3, the portion where the width direction counter portion WF and the inner layer range IL intersect is shown as the inner layer portion 10.

### (External Electrode)

The external electrodes will be described. The external electrodes include the first external electrode 20a and the second external electrode 20b. The first external electrode 20a is an external electrode connected to the first internal electrode layers 6a. The first external electrode 20a is provided on the first end surface E1, a portion of the first main surface M1, a portion of the second main surface M2, a portion of the first lateral surface S1, and a portion of the second lateral surface S2.

The second external electrode 20b is an external electrode connected to the second internal electrode layers 6b. The second external electrode 20b is provided on the second end surface E2, a portion of the first main surface M1, a portion of the second main surface M2, a portion of the first lateral surface S1, and a portion of the second lateral surface S2.

The external electrodes each preferably include a base electrode layer, an electrically conductive resin layer, and a plated layer. The plated layer preferably includes a Ni plated layer and an Sn plated layer. The external electrodes each including the base electrode layer, the electrically conductive resin layer, the Ni plated layer, and the Sn plated layer will be described below.

### (Base Electrode Layer)

The base electrode layer includes a first base electrode layer 21a and a second base electrode layer 21b. The first base electrode layer 21a is provided on the first end surface E1, a portion of the first main surface M1, a portion of the second main surface M2, a portion of the first lateral surface S1, and a portion of the second lateral surface S2. The second base electrode layer 21b is provided on the second end surface E2, a portion of the first main surface M1, a portion of the second main surface M2, a portion of the first lateral surface S1, and a portion of the second lateral surface S2.

The base electrode layer includes an electrically conductive metal and a glass component. The electrically conductive metal is at least one of Cu, Ni, Ag, Pd, Ag-Pd alloy, Au, and the like. The glass component is at least one of B, Si, Ba, Mg, Al, Li, and the like.

The base electrode layer may include a plurality of layers. The base electrode layer can be formed by applying an electrically conductive paste containing a glass component and a metal to the multilayer body, and then firing the resulting product. The firing of the base electrode layer can be performed simultaneously with the firing of the internal electrode layers. Alternatively, the firing of the base electrode layer can be performed separately after firing the internal electrode layers.

When firing the base electrode layer simultaneously with the internal electrode layers, it is preferable to add a dielectric material instead of a glass component to the electrically conductive paste. This makes it possible to improve the adhesion between the base electrode layer and the multilayer body 2.

The thickness of the base electrode layer at the height direction-middle position on the first end surface E1 or the second end surface E2 is preferably 10 µm or more and 150 µm or less.

When the base electrode layer is provided on the first main surface M1, the second main surface M2, the first lateral surface S1, and the second lateral surface S2, the thickness of the base electrode layer at the length direction-middle position on the first main surface M1, the second main surface M2, the first lateral surface S1, and the second lateral surface S2 is preferably 5 µm or more and 50 µm or less.

In addition, the base electrode layer may be a thin film layer. When the base electrode layer is a thin film layer, the thin film layer can be formed by a thin film formation method such as sputtering or vapor deposition. The formed thin film layer is a layer in which metal particles are deposited. The thickness of the thin film layer is preferably 1 µm or less.

### (Electrically Conductive Resin Layer)

An electrically conductive resin layer is provided on the base electrode layer. The electrically conductive resin layer includes a resin component and a metal component. The electrically conductive resin layer includes a first electrically conductive resin layer 22a and a second electrically conductive resin layer 22b.

The first electrically conductive resin layer 22a is provided on the first base electrode layer 21a. The first electrically conductive resin layer 22a covers the first base electrode layer 21a. The second electrically conductive resin layer 22b is provided on the second base electrode layer 21b. The second electrically conductive resin layer 22b covers the second base electrode layer 21b. The end of the electrically conductive resin layer is preferably in contact with the multilayer body 2.

The electrically conductive resin layer includes a thermosetting resin. By including the thermosetting resin, the electrically conductive resin layer is more flexible than the base electrode layer.

The electrically conductive resin layer functions as a buffer layer. Therefore, when a bending stress is applied to the mounting substrate and a physical impact is applied to the multilayer ceramic capacitor 1 due to this stress, cracks are less likely to occur in the multilayer ceramic capacitor 1. When shock due to thermal cycling is applied to the multilayer ceramic capacitor 1, cracks are less likely to occur in the multilayer ceramic capacitor 1.

The thermosetting resin included in the electrically conductive resin layer can be a thermosetting resin such as epoxy resin, phenol resin, urethane resin, silicone resin, polyimide resin, or the like. Among these resins, epoxy resins is some of the most suitable resins. Epoxy resins have excellent heat resistance, moisture resistance, adhesion, and the like.

The electrically conductive resin layer preferably includes a curing agent in addition to the thermosetting resin. When an epoxy resin is used as the heat-curable resin, the curing agent can be a compound such as phenol-based, amine-based, acid anhydride-based, imidazole-based, active ester-based, amidoimide-based, or the like.

As described above, the electrically conductive resin layer includes a metal component. By including the metal component in the electrically conductive resin layer, the electrically conductive resin layer is electrically conductive. The metal component included in the electrically conductive resin layer is included in the electrically conductive resin layer as a metal filler. Contact between metal fillers forms an electrically conductive path inside the electrically conductive resin layer. The formed electrically conductive path allows the electrically conductive resin layer to be electrically conductive. The metal component will be described later.

The thickness of the electrically conductive resin layer 22 at the height direction-middle position located on the first end surface E1 or the second end surface E2 is preferably 10 µm or more and 200 µm or less.

When the electrically conductive resin layer is provided on the first main surface M1, the second main surface M2, the first lateral surface S1, and the second lateral surface S2, the thickness of the electrically conductive resin layer at the length direction-middle position on the first main surface M1, the second main surface M2, the first lateral surface S1, and the second lateral surface S2 is preferably 10 µm or more and 200 µm or less.

### (Plated Layer)

The plated layer will be described. The plated layer includes a Ni plated layer and a Sn plated layer.

### (Ni Plated Layer)

The Ni plated layer is provided on the electrically conductive resin layer. The Ni plated layer covers at least a portion of the electrically conductive resin layer. The Ni plated layer includes a first Ni plated layer 23a and a second Ni plated layer 23b. The first Ni plated layer 23a is provided on the first electrically conductive resin layer 22a. The second Ni plated layer 23b is provided on the second electrically conductive resin layer 22b.

The Ni plated layer reduces or prevents erosion of the base electrode layer or the like by solder when mounting the multilayer ceramic capacitor 1.

### (Sn Plated Layer)

The Sn plated layer is provided on the Ni plated layer. The Sn plated layer covers at least a portion of the Ni plated layer. The Sn plated layer includes a first Sn plated layer 24a and a second Sn plated layer 24b. The first Sn plated layer 24a is provided on the first Ni plated layer 23a. The second Sn plated layer 24b is provided on the second Ni plated layer 23b.

The Sn plated layer has good solder wettability. The Sn plated layer facilitates mounting of the multilayer ceramic capacitor 1 on a substrate or the like.

The thickness per layer of the Ni plated layer and the Sn plated layer is preferably 2 µm or more and 15 µm or less.

The size of the multilayer ceramic capacitor 1 is not limited thereto. The preferred length direction dimension of the multilayer ceramic capacitor 1 including the multilayer body 2 and the external electrodes is 0.2 mm or more and 10 mm or less. The preferred height direction dimension of the multilayer ceramic capacitor 1 including the multilayer body 2 and the external electrodes is 0.1 mm or more and 5 mm or less. The preferred width direction dimension of the multilayer ceramic capacitor 1 including the multilayer body 2 and the external electrodes is 0.1 mm or more and 10 mm or less.

### (Metal Component)

The metal component included in the electrically conductive resin layer will be described. The electrically conductive resin layer includes a metal component in order to provide electrical conductivity to the electrically conductive resin layer.

The metal component included in the electrically conductive resin layer can be Ag, Cu, Ni, Sn, Bi, or an alloy containing these metals.
The metal component preferably includes Ag in particular. Ag may be Ag alone. Alternatively, Ag may be an alloy containing Ag.

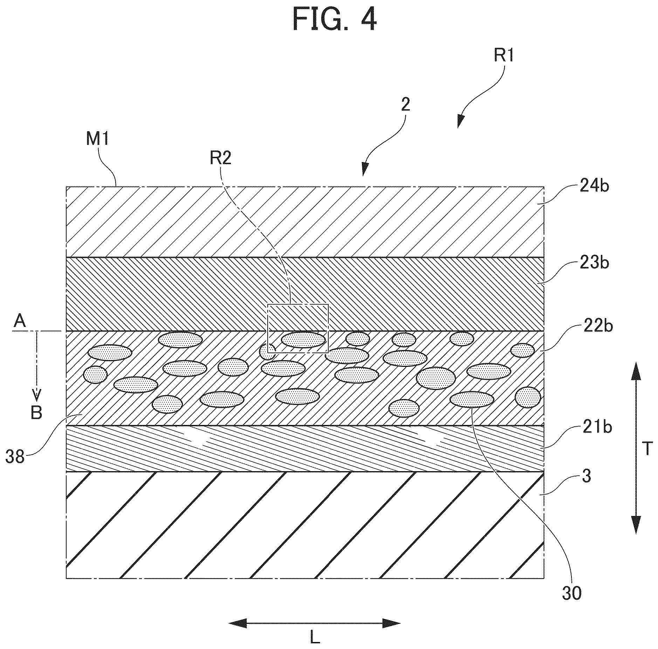

The metal component is included in the electrically conductive resin layer as a metal filler as described above. FIG. 4 is an enlarged view of the region R1 enclosed by a frame in FIG. 2. The following description will be provided using the second electrically conductive resin layer 22b as an example of the electrically conductive resin layer. However, the following description also applies to the first electrically conductive resin layer 22a.

As shown in FIG. 4, metal fillers 30 are provided in the second electrically conductive resin layer 22b. The metal fillers 30 are arranged to be dispersed within an electrically conductive resin 38.

The shape of the metal fillers 30 included in the electrically conductive resin layer is not particularly limited.
The shape of the metal fillers 30 may be spherical or flat. The metal fillers 30 may be a mixture of spherical metal powder and flat metal powder.

FIG. 4 shows metal fillers 30 having a flat shape.

The average particle size of the metal fillers 30 included in the electrically conductive resin layer is not particularly limited.
The average particle size of the metal fillers 30 can be, for example, 0.1 µm or more and 1 µm or less. The average particle size of the metal fillers included in the electrically conductive resin layer can be determined by calculation based on the laser diffraction particle size measurement method (based on IOS 13320). This method for determining the average particle size can be applied regardless of the shape of the filler.

It is preferable that the amount of resin included in the electrically conductive resin layer is 25 vmol% or more and 65 vmol% or less with respect to the total volume of the electrically conductive resin layer.

It is preferable that the amount of metal component included in the electrically conductive resin layer is 35 vmol% or more and 75 vmol% or less with respect to the total volume of the electrically conductive resin layer.

### (Metal Filler Surface)

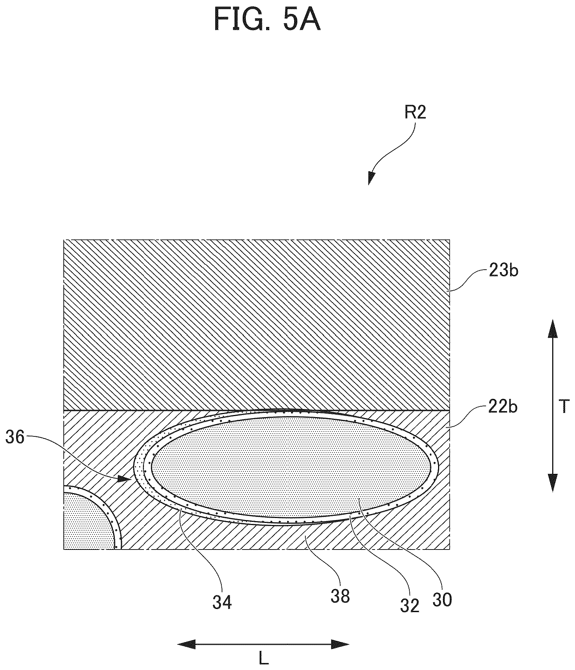

In the present embodiment, Ni is provided on at least a portion of the surface of each of the metal fillers 30. FIG. 5A is an enlarged view of the region R2 enclosed by a frame in FIG. 4. The Ni provided on the surface of each of the metal fillers 30 is referred to as a Ni portion 32. In the metal filler 30 shown in FIG. 5A, the Ni portion 32 is provided on the entire surface of the metal filler 30. In the metal filler 30 of the present embodiment, Sn may be further provided on at least a portion of the surface of the metal filler 30 or on at least a portion of the outer surface of the Ni portion 32. The Sn provided on the surface of the metal filler 30 is referred to as the Sn portion 34. In the metal filler 30 shown in FIG. 5A, the Sn portion 34 is provided on a portion of the outer surface of the Ni portion 32.

As shown in FIG. 5A, the Ni portion 32 and the Sn portion 34 are provided on the surface of the metal filler 30.

In the example shown in FIG. 5A, the Ni portion 32 is provided around the entire periphery of the metal filler 30. However, it is not necessary for the Ni portion 32 to be provided around the entire periphery of the metal filler 30, and may be provided at least at a portion of the periphery.

Also, in the example shown in FIG. 5A, the Sn portion 34 is provided on the outer surface of the Ni portion 32. However, it is not necessary for the Sn portion 34 to be provided on the outer surface of the Ni portion 32, and may be provided on the surface of the metal filler 30. Also, the Sn portion 34 may be provided on both the outer surface of the Ni portion 32 and the surface of the metal filler 30.

The Ni portion 32 provided on the surface of the metal filler 30 is made of Ni, which is a component of the Ni plated layer.
Ni, which is a component of the Ni plated layer, indicates a Ni material used when forming the Ni plated layer. In this case, the Ni portion 32 is formed simultaneously with the formation of the Ni plated layer.

The formation of the Ni portion 32 with Ni, which is a component of the Ni plated layer, can increase the electrical connection between the resin electrode layer and the plated layer.
Furthermore, the formation of the Sn portion 34 can further increase the electrical connection between the resin electrode layer and the plated layer.

In the metal filler 30 of the present embodiment, at least a portion of the surface of the metal filler 30 is covered with the Ni portion 32.
The metal filler 30 in which at least a portion of the surface of the metal filler 30 is covered with the Ni portion 32 is referred to as a Ni-coated filler 36.

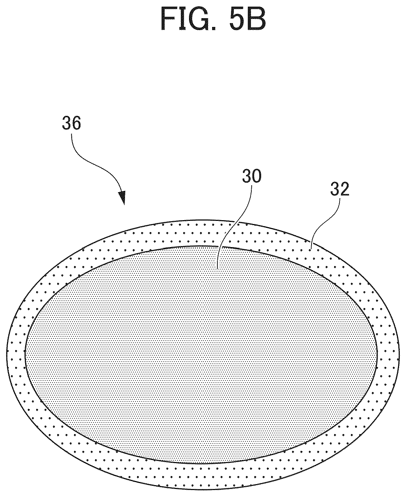

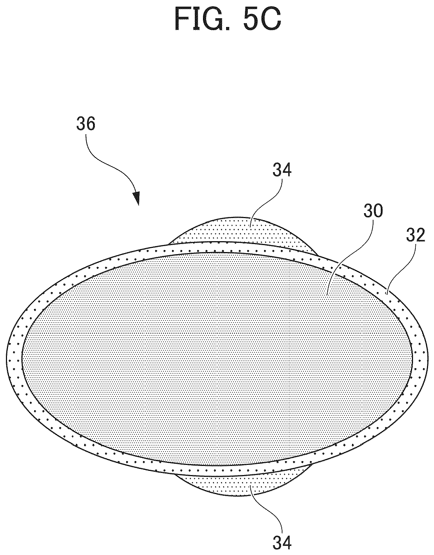

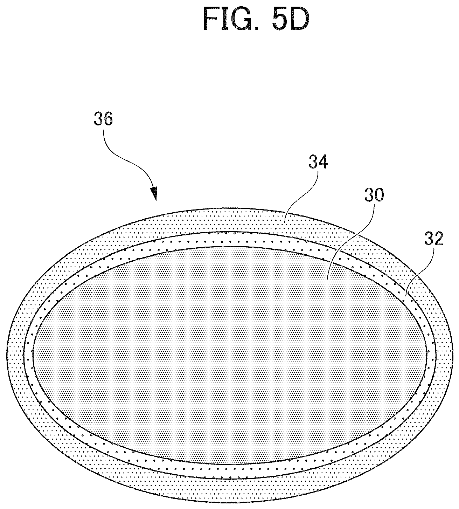

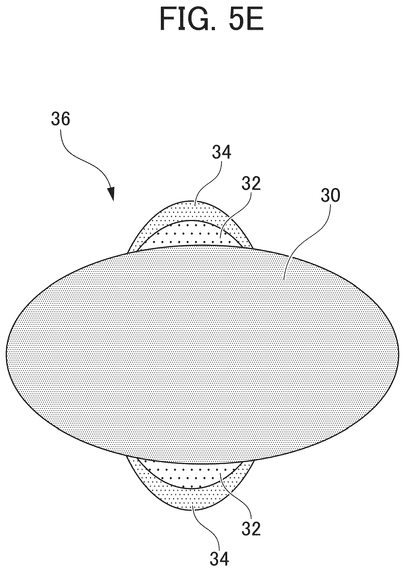

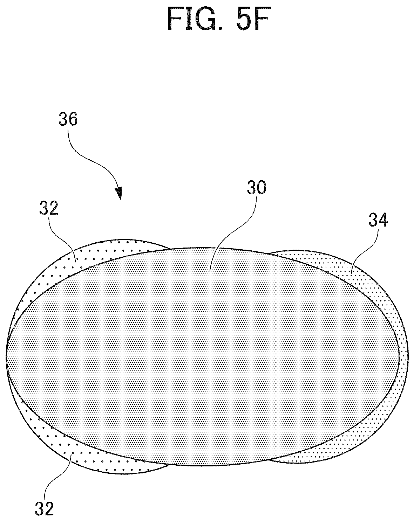

In the Ni-coated filler 36 shown in FIG. 5A, the entire surface of the metal filler 30 is covered with the Ni portion 32, and the Sn portion 34 is provided on a portion of the outer surface of the Ni portion 32. However, the configuration of the Ni-coated filler 36 is not limited thereto. FIGS. 5B to 5F are diagrams showing examples of the Ni-coated filler 36. For example, the Ni-coated filler 36 may be in the form shown in each of FIGS. 5B to 5F. In the example shown in FIG. 5B, the entire surface of the metal filler 30 is covered with the Ni portion 32. More specifically, the entire surface of the metal filler 30 is covered only with the Ni portion 32. In the example shown in FIG. 5C, the entire surface of the metal filler 30 is covered with the Ni portion 32, and the Sn portion 34 is further provided on at least a portion of the outer surface of the Ni portion 32. More specifically, the Sn portion 34 is provided only on a portion of the outer surface of the Ni portion 32. In the example shown in FIG. 5D, the entire surface of the metal filler 30 is covered with the Ni portion 32, and the entire outer surface of the Ni portion 32 is further covered with the Sn portion 34. In the example shown in FIG. 5E, the Ni portion 32 is provided on a portion of the surface of the metal filler 30, and the entire outer surface of the Ni portion 32 is covered with the Sn portion 34. In the example shown in FIG. 5F, the Ni portion 32 is provided on a portion of the surface of the metal filler 30, and the Sn portion 34 is provided on another portion of the surface of the metal filler 30. The Sn portion 34 may be provided on at least a portion of the surface of the metal filler 30 or at least a portion of the outer surface of the Ni portion 32. Also, the entire surface of the metal filler 30 may be covered with the Ni portion 32 or the Sn portion 34. For example, a portion of the surface of the metal filler 30 may be covered with the Ni portion 32, and the remaining other surface of the metal filler 30 may be covered with the Sn portion 34. Thus, it is sufficient if the metal filler 30 of the present embodiment is one in which the Ni portion 32 is provided on at least a portion of the surface of the metal filler 30.

### (Ni-coated Filler Layer)

In the resin electrode layer, a layer in which the Ni-coated filler 36 is present is referred to as a Ni-coated filler layer. In the example shown in FIG. 5A, a range belonging to the same position as the position of the Ni-coated filler 36 in the height direction T corresponds to the Ni-coated filler layer.

The formation of the Ni portion 32, more preferably, the formation of the Sn portion 34 as well as the Ni portion 32, on the metal filler 30 can reduce the ESR (Equivalent Series Resistance).

This is because it is possible to increase the electrical connection between the resin electrode layer and the plated layer due to the Ni included in the Ni portion 32 being Ni, which is a component of the Ni plated layer, and preferably due to the formation of the Sn portion 34 as well as the Ni portion 32.

FIG. 5A exemplifies a state in which the Ni portion 32 provided on the metal filler 30 is in contact with the Ni plated layer. FIG. 5A also shows a state in which the Sn portion 34 of the metal filler 30 is not in contact with other metal fillers 30. However, portions where metal fillers 30 are in contact with each other may not be observed depending on the cross section being observed. In other words, by changing the cross section being observed, portions where metal fillers 30 are in contact with each other may be observed. In the resin electrode layer, the conductivity of the resin electrode layer is enhanced by the metal filler 30 being in contact with other metal fillers 30.

It is preferable that the region where the Ni-coated filler layer is provided is located within a range of 5.0 µm or less from the interface between the electrically conductive resin layer and the Ni plated layer toward the interior of the multilayer body 2 in the height direction T. In other words, it is preferable that the region where the Ni-coated filler layer is provided is located within a range of 5.0 µm or less in the depth direction from the interface between the electrically conductive resin layer and the Ni plated layer toward the interior of the multilayer body 2.

Furthermore, it is more preferable that the region where the Ni-coated filler layer is provided is located within a range of 0.5 µm or more and 5.0 µm or less from the interface between the electrically conductive resin layer and the Ni plated layer toward the interior of the multilayer body 2 in the height direction T. The region where the Ni-coated filler layer is provided refers to a range, particularly in the height direction T, at the position where the Ni-coated filler layer is provided.

Based on FIG. 4, an explanation will be provided using the second electrically conductive resin layer 22b as an example of the electrically conductive resin layer and the second Ni plated layer 23b as an example of the Ni plated layer. The line A in FIG. 4 indicates the interface between the second electrically conductive resin layer 22b and the second Ni plated layer 23b. The arrow B in FIG. 4 indicates the direction from the interface A between the second electrically conductive resin layer 22b and the second Ni plated layer 23b toward the interior of the multilayer body 2 in the height direction T.

By providing the Ni-coated filler layer within a range of 5.0 µm or less in the direction B toward the interior of the multilayer body 2 from the interface A between the second electrically conductive resin layer 22b and the second Ni plated layer 23b, it is possible to obtain an ESR reduction effect, while ensuring the mechanical strength of the multilayer ceramic capacitor.

Furthermore, by providing the Ni-coated filler layer within a range of 0.5 µm or more and 5.0 µm or less in the direction B toward the interior of the multilayer body 2 from the interface A between the second electrically conductive resin layer 22b and the second Ni plated layer 23b, it is possible to further increase the electrical connection between the second electrically conductive resin layer 22b and the second Ni plated layer 23b or the second Sn plated layer 24b, and to further reduce the ESR.

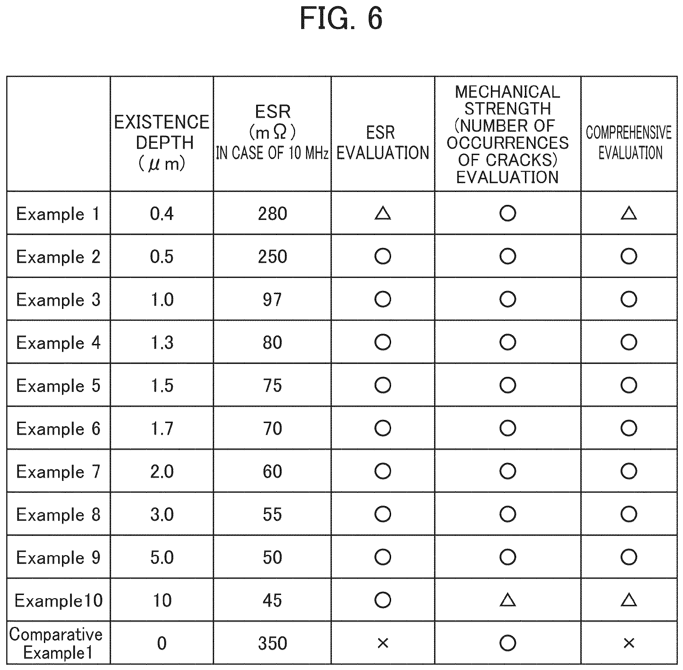

FIG. 6 is a diagram showing Examples and Comparative Examples of the present embodiment. The existence depth shown in FIG. 6 refers to the depth at which the Ni-coated filler 36 exists, and refers to the distance of the Ni-coated filler layer from the interface A between the electrically conductive resin layer and the Ni plated layer toward the interior of the multilayer body 2 in the direction B.

The conditions of the multilayer ceramic capacitors used for evaluation are as follows. The size of each of the multilayer ceramic capacitors was 3.2 mm in the length direction, 1.6 mm in the width direction, and 1.6 mm in the height direction. The electrostatic capacitance of each of the multilayer ceramic capacitors was 0.01 µF. The rated voltage of each of the multilayer ceramic capacitors was 630 V.

The measurement method and evaluation criteria for ESR are as follows. For ESR measurement, each of the multilayer ceramic capacitors was heat-treated at 150°C for 1 hour in an air atmosphere before measurement, then mounted on a measurement substrate, and measured 24±2 hours after the completion of the heat treatment using a network analyzer with a measurement frequency of 1 MHz. The ESR values shown in FIG. 6 are the average values obtained by measuring ESR for 100 samples.

The average value of 100 ESR measurements was evaluated as "o" (circle symbol indicating good) if it was 250 mΩ or less, "Δ" (triangle symbol indicating fair) if it was greater than 250 mΩ and 300 mΩ or less, and "x" (cross symbol indicating poor) if it was greater than 300 mΩ.

The evaluation method and criteria for mechanical strength are as follows. The mechanical strength was evaluated based on the difficulty of crack occurrence. For the mechanical strength, bending tests were conducted on 30 multilayer ceramic capacitors after plating according to the method of JIS C 6484, and the number of cracks generated when the bending amount was fixed at 5 mm was measured.

For 30 multilayer ceramic capacitors, those without cracks were marked as o, those with at least one crack that did not reach the internal electrode layers were marked as Δ, and those with at least one crack reaching the internal electrode layers were marked as x.

The comprehensive evaluation is a comprehensive assessment based on the ESR values and crack occurrence conditions. Good results were marked as o, results with no particular problems were marked as Δ, and problematic results were marked as x.

As shown in FIG. 6, no Ni-coated filler layer is provided in the multilayer ceramic capacitor of the comparative example. The multilayer ceramic capacitor of the Comparative Example exhibits an ESR evaluation of x and a comprehensive evaluation of x.

On the other hand, in the Examples, Ni-coated filler layers with predetermined existence depths are provided. As shown in Examples 2 to 10, when the existence depth is 0.5 µm or more and 10 µm or less, the ESR evaluation was o. As shown in Example 1, when the existence depth is 0.4 µm or less, the ESR evaluation was Δ. When the existence depth is 0.4 µm or less, it is considered that the ESR increases due to a decrease in the bonding area between fillers through the Ni portion and between the fillers and the plated layer, resulting in greater electrical loss.

Regarding the mechanical strength, as shown in Examples 1 to 9, when the existence depth is 5.0 µm or less, the mechanical strength evaluation was o. As shown in Example 10, when the existence depth is 10 µm, the mechanical strength evaluation was Δ. When the existence depth exceeds 5.0 µm, it is considered that hard metal components from the plated layer penetrate into the electrically conductive resin layer, causing the electrically conductive resin layer to be hard, which prevents stress relaxation and reduces mechanical strength.

Based on the ESR evaluation and mechanical strength evaluation described above, the comprehensive evaluation marked Examples 2 to 9 as o and Examples 1 and 10 as Δ.

As shown in FIG. 6, when the Ni-coated filler layer is located within a range of 5.0 µm or less from the interface between the electrically conductive resin layer and the Ni plated layer toward the interior of the multilayer body 2 in the height direction, the comprehensive evaluation was o or Δ.

Furthermore, when the Ni-coated filler layer is located within a range of 0.5 µm or more and 5.0 µm or less from the interface between the electrically conductive resin layer and the Ni plated layer toward the interior of the multilayer body 2 in the height direction, the comprehensive evaluation was o.

### (Measurement Method)

The LT cross section shown in FIG. 4 can be observed, for example, as follows. The multilayer ceramic capacitor 1 is polished to the width direction-middle position. Then, the exposed cross section by polishing is observed using an optical microscope or the like. The length and thickness of each portion can be measured from the observed cross section.

### (Manufacturing Method of Multilayer Ceramic Capacitor)

A manufacturing method of the multilayer ceramic capacitor 1 will be described.
(1) Prepare a dielectric sheet and an electrically conductive paste for internal electrode layers. The dielectric sheet and the electrically conductive paste for manufacturing internal electrode layers include a binder and a solvent. The binder and the solvent may be known organic binders and organic solvents.
(2) Print the electrically conductive paste for manufacturing internal electrode layers on the dielectric sheet in a predetermined pattern. The internal electrode layer pattern is formed by printing the electrically conductive paste. The printing can be performed by, for example, screen printing or gravure printing.
(3) Laminate a predetermined number of dielectric sheets for manufacturing the outer layer portion. No internal electrode layer pattern is printed on the dielectric sheets for manufacturing the outer layer portion. Dielectric sheets with printed internal electrode layer patterns are sequentially laminated on the laminated dielectric sheets. Furthermore, a predetermined number of dielectric sheets for manufacturing the outer layer portion are laminated thereon. A multilayer sheet is produced by these lamination processes.
(4) Manufacture a multilayer block by pressing the multilayer sheet in the height direction. A hydrostatic press can be used for the pressing method.
(5) Cut the multilayer block to a predetermined size. Multilayer chips are cut out by this cutting. The corner portions and ridge portions of each of the multilayer chips may be rounded. Barrel polishing can be used for the method for rounding.
(6) Fire the multilayer chips. Multilayer bodies are manufactured by this firing. The preferred firing temperature is 900°C or higher and 1200°C or lower. The firing temperature can be changed according to the materials of the dielectric and the internal electrode layer.
   External electrodes are provided on each of the multilayer bodies.
(7) Apply electrically conductive paste for manufacturing a base electrode to both end surfaces of the multilayer body. The electrically conductive paste includes a glass component and metal. A dipping method can be used for the application, for example. After the application, firing treatment is performed. The base electrode layer is formed by this firing treatment. The preferred temperature for the firing treatment is 700°C or higher and 900°C or lower. The base electrode layer is a fired layer.
(8) Form the electrically conductive resin layer on the base electrode layer. An electrically conductive resin paste is prepared. The electrically conductive resin paste includes resin components and metal fillers. The electrically conductive resin paste is applied to the base electrode layer. A dipping method can be used for the application, for example.

In the present embodiment, as a solvent for the electrically conductive resin paste, a solvent in which a high-boiling-point solvent having a boiling point of 250°C or higher shown below is added to diethylene glycol monobutyl ether (molecular weight is 162.23, and boiling point is 230°C) is used.
- Dibutyl sebacate (molecular weight is 314.47, and boiling point is 345°C)
- Diethyl sebacate (molecular weight is 258.36, and boiling point is 309°C)
- Dibutyl adipate (molecular weight is 258.36, and boiling point is 305°C)
- Dimethyl sebacate (molecular weight is 230.30, and boiling point is 294°C)
- Diethyl suberate (molecular weight is 230.30, and boiling point is 283°C)
- Dibutyl succinate (molecular weight is 230.30, and boiling point is 274°C)
- Diethyl adipate (molecular weight is 202.25, and boiling point is 251°C)

A single type of high-boiling-point solvent may be added, or multiple types may be added. In the present embodiment, for example, dibutyl adipate (molecular weight is 258.36, and boiling point is 305°C) is used.

After the application, heat treatment is performed. As the heat treatment, the paste is dried for 10 minutes at 150°C or higher and 180°C or lower in a hot air oven. After that, it is cured for 60 minutes at 200°C or higher and 280°C or lower in an air atmosphere. The electrically conductive electrode layer is formed by this heat curing.

As described above, by adding a high-boiling-point solvent and setting the heat treatment conditions, it is possible to form voids near the metal fillers. Ni from Ni plating to be described later flows into these voids, resulting in the formation of Ni-coated fillers and, consequently, a Ni-coated filler layer.

The atmosphere during heat treatment is preferably a nitrogen gas atmosphere. The preferred oxygen concentration is 100 ppm or less. This oxygen concentration makes it difficult for the resin to scatter. In addition, this oxygen concentration makes it difficult for various metal components to oxidize.

(9) After forming the electrically conductive resin layer, form a Ni plated layer on the surface of the resin layer. This Ni plated layer functions as the first Ni plated layer and the second Ni plated layer. An electrolytic plating method can be used for the method for forming the Ni plated layer. The preferred plating method is barrel plating.

(10) Form a Sn plated layer on the Ni plated layer. The first Sn plated layer is formed on the first Ni plated layer. The second Sn plated layer is formed on the second Ni plated layer. By forming the Sn plated layer, it is possible to improve the wettability of the solder used for mounting when the multilayer ceramic capacitor 1 is mounted on a substrate or the like. This facilitates mounting of the multilayer ceramic capacitor 1 on a substrate or the like. An electrolytic plating method can be used for the method for forming the Sn plated layer. The preferred plating method is barrel plating.

In the present embodiment, during Ni plating and Sn plating, Ni plating components flow into the voids near the metal fillers. This forms Ni-coated fillers, and a Ni-coated filler layer is formed within the resin electrode layer. The region where the Ni-coated filler layer is formed can be controlled by controlling the electric current during Ni plating. When placing the Sn portion in addition to the Ni portion on the surface of the metal filler, Sn media may be mixed during Ni plating using a barrel. This allows the Ni portion to be placed on the surface of the metal filler along with the Sn portion. However, the method for placing the Sn portion is not limited thereto.

While embodiments of the present invention have been described above, the present invention is not limited to the embodiments described above and various changes and modifications are possible.

### EXPLANATION OF REFERENCE NUMERALS

1 multilayer ceramic capacitor
2 multilayer body
3 outer dielectric layer
4 inner dielectric layer
5a first dielectric layer
5b second dielectric layer
6a first internal electrode layer
6b second internal electrode layer
10 inner layer portion
20a first external electrode
20b second external electrode
21a first base electrode layer
21b second base electrode layer
22a first electrically conductive resin layer
22b second electrically conductive resin layer
23a first Ni plated layer
23b second Ni plated layer
24a first Sn plated layer
24b second Sn plated layer
30 metal filler
32 Ni portion
34 Sn portion
36 Ni-coated filler
38 electrically conductive resin
40 void
42 filler periphery

## Claims

1. A multilayer ceramic capacitor comprising:
a multilayer body including a plurality of dielectric layers that are laminated, a first main surface and a second main surface that are opposed to each other in a height direction, a first lateral surface and a second lateral surface that are opposed to each other in a width direction orthogonal to the height direction, and a first end surface and a second end surface that are opposed to each other in a length direction orthogonal to the height direction and the width direction;
a first internal electrode layer that is on each of the plurality of dielectric layers and exposed at the first end surface;
a second internal electrode layer that is on each of the plurality of dielectric layers and exposed at the second end surface;
a first external electrode on the first end surface; and
a second external electrode on the second end surface,
wherein
each of the first external electrode and the second external electrode includes a base electrode layer including a metal component, an electrically conductive resin layer that is on the base electrode layer and includes a thermosetting resin and a metal filler, a Ni plated layer on the electrically conductive resin layer, and a Sn plated layer on the Ni plated layer; and
Ni, which is a component of the Ni plated layer, is provided on at least a portion of a surface of the metal filler.

2. The multilayer ceramic capacitor according to claim 1, wherein an entire surface of the metal filler is covered with Ni, which is a component of the Ni plated layer.

3. The multilayer ceramic capacitor according to claim 2, wherein Sn is provided on at least a portion of an outer surface of the Ni covering the surface of the metal filler.

4. The multilayer ceramic capacitor according to claim 2, wherein an entire outer surface of the Ni covering the surface of the metal filler is covered with Sn.

5. The multilayer ceramic capacitor according to claim 1, wherein Ni, which is a component of the Ni plated layer, is provided on a portion of the surface of the metal filler, and an entire outer surface of the Ni provided on the surface of the metal filler is covered with Sn.

6. The multilayer ceramic capacitor according to claim 1, wherein Sn is provided on at least a portion of the surface of the metal filler, or on at least a portion of an outer surface of the Ni provided on the surface of the metal filler.

7. The multilayer ceramic capacitor according to claim 1, wherein the entire surface of the metal filler is covered with Ni or Sn.

8. The multilayer ceramic capacitor according to any one of claims 1 to 7, wherein the electrically conductive resin layer includes a Ni-coated filler layer which is a layer in which the metal filler exists, the metal filler including a surface which is coated with Ni, which is a component of the Ni plated layer.

9. The multilayer ceramic capacitor according to claim 8, wherein a region where the Ni-coated filler layer is provided is located within a range of 5.0 µm or less from an interface between the electrically conductive resin layer and the Ni plated layer toward an interior of the multilayer body in the height direction.

10. The multilayer ceramic capacitor according to claim 8, wherein the region where the Ni-coated filler layer is provided is located within a range of 0.5 µm or more and 5.0 µm or less from an interface between the electrically conductive resin layer and the Ni plated layer toward an interior of the multilayer body in the height direction.
